# EUROPÄISCHE PATENTANMELDUNG

(11) **EP 3 943 334 A1**
(43) Veröffentlichungstag der Anmeldung: **26.01.2022**
(21) Anmeldenummer: 21177002.9
(22) Anmeldetag: 01.06.2021
(51) Int. Cl.: B60L 9/00, B60L 50/53, B60L 58/13, B60L 58/14, B60L 58/15, B60L 58/12, G01C 21/34, B61C 3/02

(54) **VERFAHREN ZUM BETREIBEN EINES FAHRZEUGES**

(30) Priorität: 22.07.2020 DE 102020209176
(71) Anmelder: VOLKSWAGEN AG, 38440 Wolfsburg (DE)
(72) Erfinder: Wallentin, Per, 153 30 Järna (SE); Cassebaum, Dr. Oliver, 38448 Wolfsburg (DE); Heinrich, Felix, 38114 Braunschweig (DE)

(57) **Zusammenfassung**

Die Erfindung betrifft ein Verfahren zum Betreiben eines Fahrzeuges (100), insbesondere eines Hybridfahrzeuges oder Elektrofahrzeuges, mit einem Stromabnehmer (102) zur Kontaktierung einer Oberleitung (200) und einer Fahrzeugbatterie (101) zum Versorgen mindestens eines Verbrauchers des Fahrzeuges (100) mit elektrischer Energie des Fahrzeuges (100), aufweisend folgende Schritte:
1) Erfassen einer Kontaktierung der Oberleitung (200) durch den Stromabnehmer (102) und
2) Anpassen, insbesondere Erweitern, eines zulässigen SOC-Bereiches (SOCmin, SOCmax) der Fahrzeugbatterie (101), um die Fahrzeugbatterie (101) mit dem angepassten SOC-Bereich (SOCmin, SOCmax) aufzuladen, und Betreiben des Fahrzeuges (100) mit dem angepassten zulässigen SOC-Bereich (SOCmin, SOCmax) der Fahrzeugbatterie (101).

## Beschreibung

Die Erfindung betrifft ein Verfahren zum Betreiben eines Fahrzeuges, insbesondere eines Hybridfahrzeuges oder Elektrofahrzeuges, mit einem Stromabnehmer zur Kontaktierung einer Oberleitung nach dem unabhängigen Anspruch. Zudem betrifft die Erfindung ein Fahrzeug, welches mithilfe eines entsprechenden Verfahrens betrieben werden kann.

Oberleitungen sind grundsätzlich bekannt, bspw. im Bereich von Eisenbahnen, wie z. B. Straßen-/Stadtbahnen, Hoch-/Untergrundbahnen sowie Gebirgs- und Bergbahnen. Oberleitungen stellen Fahrleitungen für Fahrzeuge bereit, um Fahrzeuge mit Bahnstrom zu versorgen. Auch spezielle Verkehrsmittel, wie z. B. Oberleitungsbusse, Oberleitungslastkraftwagen oder Oberleitungsfähren können mithilfe von Oberleitungen mit elektrischer Energie betrieben werden. All diese Fahrzeuge weisen zumeist Batterien auf, die zum Antreiben der Fahrzeuge und/oder zum Versorgen von Fahrzeugabnehmer mit elektrischer Energie dienen. Die Batterien werden oft mit zulässigen Lade- und Entladegrenzen versehen, um die Alterung der Batterien zu vermeiden. In einem Oberleitungsbetrieb von solchen Fahrzeugen können die zulässigen Lade- und Entladegrenzen nicht optimal für den Betrieb der Fahrzeuge sein, insbesondere für den Fall, wenn die Batterie nicht ausreichend geladen wurde und die Oberleitung bald endet.

Der Erfindung liegt daher die Aufgabe zugrunde, ein Verfahren zum Betreiben eines Fahrzeuges, insbesondere eines Hybridfahrzeuges oder Elektrofahrzeuges, mit einem Stromabnehmer zur Kontaktierung einer Oberleitung bereitzustellen, das einen verbesserten Betrieb des Fahrzeuges beim und nach dem Kontaktieren der Oberleitungen ermöglicht, das eine effektive Ausnutzung der elektrischen Energie der Batterie ermöglicht und das die Batterie zuverlässig vor Alterung, insbesondere durch Überladen und/oder zu tiefes Entladen, schützt. Ferner ist es die Aufgabe der Erfindung, ein Verfahren zum Betreiben eines Fahrzeuges bereitzustellen, das verständlich für den Fahrer des Fahrzeuges durchgeführt werden kann, dass nach Wunsch des Fahrers gestartet werden kann und/oder das es dem Fahrer ermöglicht, den Ablauf des Verfahrens zu beeinflussen. Zudem ist es die Aufgabe der Erfindung, ein Verfahren zum Betreiben eines Fahrzeuges bereitzustellen, das die Fahrzeuginfrastruktur auf eine verbesserte Weise einbezieht und die vielfältigen Möglichkeiten in den Fahrzeugen nutzt, um das Verfahren effizient, schnell und kundenfreundlich durchzuführen.

Die erfindungsgemäße Aufgabe wird gelöst durch ein Verfahren zum Betreiben eines Fahrzeuges, insbesondere eines Hybridfahrzeuges oder Elektrofahrzeuges, mit einem Stromabnehmer zur Kontaktierung einer Oberleitung nach dem unabhängigen Verfahrensanspruch. Zudem wird die erfindungsgemäße Aufgabe durch ein Fahrzeug gelöst, welches mithilfe eines entsprechenden Verfahrens betrieben werden kann. Dabei gelten Merkmale, die im Zusammenhang mit einzelnen Erfindungsaspekten der Erfindung beschrieben sind, selbstverständlich auch im Zusammenhang mit den anderen Erfindungsaspekten und jeweils umgekehrt, sodass bezüglich der Offenbarung zu den einzelnen Erfindungsaspekten stets wechselseitig Bezug genommen wird bzw. werden kann.

Die Erfindung stellt ein Verfahren zum Betreiben (umfassend Fahren) eines Fahrzeuges, insbesondere eines Hybridfahrzeuges oder Elektrofahrzeuges dar, mit einem Stromabnehmer, bspw. in Form eines Hebelgestänges oder eines biegsamen und/oder federnden Gebildes, zur Kontaktierung einer Oberleitung, und (mindestens) einer Fahrzeugbatterie zum Versorgen mindestens eines Verbrauchers des Fahrzeuges mit elektrischer Energie,
aufweisend folgende Schritte:
1) Erfassen einer Kontaktierung der Oberleitung durch den Stromabnehmer und
2) Anpassen, insbesondere Erweitern, eines zulässigen SOC-Bereiches der Fahrzeugbatterie (bspw. Anheben einer Obergrenze und/oder Absenken einer Untergrenze des zulässigen SOC-Bereiches der Fahrzeugbatterie), um die Fahrzeugbatterie mit dem angepassten SOC-Bereich aufladen zu können, und Betreiben des Fahrzeuges mit dem angepassten zulässigen SOC-Bereich der Fahrzeugbatterie.

Die Schritte des erfindungsgemäßen Verfahrens können in der vorgegebenen oder in einer abgeänderten Reihenfolge durchgeführt werden. Vorteilhafterweise können die Schritte des erfindungsgemäßen Verfahrens simultan und/oder wiederholend durchgeführt werden, um einen fließenden Prozess zu ermöglichen.

Mithilfe des erfindungsgemäßen Verfahrens, insbesondere im Schritt 2) des erfindungsgemäßen Verfahrens, wird mit anderen Worten ein dynamischer SOC-Bereich für die Fahrzeugbatterie zum Betreiben des Fahrzeuges bereitgestellt.

Unter einer Fahrzeugbatterie im Rahmen der Erfindung kann bspw. eine Starterbatterie, eine Traktionsbatterie und/oder eine Hilfsbatterie des Fahrzeuges verstanden werden. Zum Betreiben des Fahrzeuges kann die Fahrzeugbatterie elektrische Energie für eine elektrische Maschine des Fahrzeuges und/oder für mindestens einen Energieverbraucher am Board des Fahrzeuges liefern. Das Betreiben des Fahrzeuges kann ein Fahren des Fahrzeuges umfassen. Im Rahmen der Erfindung kann das Verfahren für jede Batterie des Fahrzeuges durchgeführt werden.

Der Erfindungsgedanke liegt dabei darin, dass der SOC-Bereich, ein sog. SOC-Fenster, in dem Moment, in dem das Fahrzeug mit der Oberleitung in Kontakt kommt, angepasst, bspw. vergrößert wird. Dies bedeutet, dass es möglich gemacht wird, die Fahrzeugbatterie, bei der Kontaktierung der Oberleitung, mehr aufzuladen und dann, nach dem Verlassen der Oberleitung, länger die Batterie zu nutzen, bspw. um im elektrischen Modus zu fahren. Das angepasste, insbesondere vergrößerte, SOC-Fenster kann nur, insbesondere nur solange, auftreten, wenn das Fahrzeug mit der Oberleitung in Berührung fährt, was normalerweise für eine kurze Zeitdauer stattfinden kann, da die verfügbaren Oberleitungen auf Autobahnen eine begrenzte Länge aufweisen, zurzeit ca. 5 bis 6 km lang sind. Wenn die Infrastruktur längere Strecken mit Oberleitungen aufweist oder grundsätzlich, kann der angepasste SOC-Bereich für eine bestimmte Zeitdauer und/oder eine bestimmte Beendungszeitdauer (kurz) vor dem Ende der Oberleitung aufrechterhalten werden. Danach kann der angepasste SOC-Bereich zurück auf die (bspw. vom Hersteller) vorgeschriebenen Werte für die Fahrzeugbatterie zurückgesetzt werden. Da die Erweiterung des SOC-Fensters nicht dauerhaft, wie bspw. bei Ladevorgängen an der Steckdose erfolgt, sondern nur gezielt, insbesondere im realen Fahrbetrieb unter der Oberleitung, kann die Schädigung der Fahrzeugbatterie zuverlässig vermieden werden.

Mithilfe der Erfindung kann somit ein verbesserter Betrieb des Fahrzeuges beim und nach dem Kontaktieren der Oberleitungen ermöglicht werden, das eine effektive Ausnutzung der elektrischen Energie der Batterie ermöglicht und das die Batterie zuverlässig vor Alterung, insbesondere durch Überladen und/oder zu tiefes Entladen, schützt.

Ferner kann die Erfindung bei einem Verfahren zum Betreiben eines Fahrzeuges vorsehen, dass vor dem Schritt 1) eine vorausschauende Erkennung einer voraussichtlichen Kontaktierung der Oberleitung durch den Stromabnehmer erfolgt, und/oder dass vor dem Schritt 1) Navigationsdaten, Fahrtenbuchdaten und/oder Daten von Schilderkennungssensoren berücksichtigt werden. Auf diese Weise kann das Verfahren besonders genau und zielgerichtet durchgeführt werden. Vorteilhafterweise kann dadurch sichergestellt werden, dass die Anpassung des zulässigen SOC-Bereiches genau in dem Moment erfolgt, in dem das Fahrzeug mit der Oberleitung in Kontakt kommt, oder sogar kurz davor. Auch die Beendigung der Anpassung kann auf eine vorteilhafte Weise vorausschauend erfolgen. Zudem können dadurch die Fahrzeuginfrastruktur sowie die vielfältigen Möglichkeiten im Fahrzeug auf eine verbesserte Weise ausgenutzt werden, um das Verfahren effizient, schnell und kundenfreundlich durchzuführen. Ein weiterer Vorteil einer vorausschauende Erkennung einer voraussichtlichen Kontaktierung der Oberleitung kann darin liegen, dass eine Untergrenze des zulässigen SOC-Bereiches der Fahrzeugbatterie vorausschauend abgesenkt werden kann, wenn sich das Fahrzeug vor der Oberleitung befindet. Dies kann vorteilhaft sein, um die Batterie vor der Oberleitung so viel wie möglich zu entladen. Weiterhin kann direkt unter der Oberleitung eine Obergrenze des zulässigen SOC-Bereiches der Fahrzeugbatterie temporär angehoben werden, um die Batterie so viel wie möglich zu laden.

Darüber hinaus kann die Erfindung vorsehen, dass vor dem Schritt 1) eine Untergrenze des zulässigen SOC-Bereiches der Fahrzeugbatterie vorausschauend abgesenkt wird, wenn eine voraussichtliche Kontaktierung der Oberleitung durch den Stromabnehmer erkannt wurde. Denkbar ist dabei, dass vor dem Schritt 1) eine Untergrenze des zulässigen SOC-Bereiches der Fahrzeugbatterie vorausschauend auf mindestens 30%, 20%, 15% oder 10% abgesenkt wird, wenn eine voraussichtliche Kontaktierung der Oberleitung durch den Stromabnehmer erkannt wurde. Auf diese Weise kann die Fahrzeugbatterie vorzeitig entladen werden, bevor eine Kontaktierung der Oberleitung durch den Stromabnehmer erfolgt, um eine effektive Aufladung der Fahrzeugbatterie zu ermöglichen.

Nach einem weiteren Vorteil der Erfindung kann vor dem Schritt 1) eine Untergrenze des zulässigen SOC-Bereiches der Fahrzeugbatterie nur solange bzw. nur bis zu dem Zeitpunkt abgesenkt werden, bis bzw. wenn eine Kontaktierung der Oberleitung durch den Stromabnehmer erfasst wird. Denkbar ist zudem, dass im Schritt 1) eine Untergrenze des zulässigen SOC-Bereiches der Fahrzeugbatterie auf einen vorgeschriebenen Wert für die Fahrzeugbatterie gesetzt wird, wenn eine Kontaktierung der Oberleitung durch den Stromabnehmer erfasst wird. Auf diese Weise kann die Anpassung der Untergrenze des eines zulässigen SOC-Bereiches besonders elegant und sicher für die Batterie durchgeführt werden.

Weiterhin kann die Erfindung bei einem Verfahren zum Betreiben eines Fahrzeuges vorsehen, dass im Schritt 1) kontaktlose und/oder kontaktbehaftete Sensoren verwendet werden, und/oder dass im Schritt 1) mindestens ein Piezosensor, Drucksensor, Stromsensor und/oder Kapazitätssensor verwendet werden/wird. Auf diese Weise kann das Verfahren flexibel durchgeführt werden und dabei die verfügbaren Sensoren im Fahrzeug auf eine vorteilhafte Weise ausgenutzt werden.

Des Weiteren kann die Erfindung bei einem Verfahren zum Betreiben eines Fahrzeuges vorsehen, dass im Schritt 2) eine Obergrenze des zulässigen SOC-Bereiches der Fahrzeugbatterie angehoben wird, und/oder dass im Schritt 2) eine Obergrenze des zulässigen SOC-Bereiches der Fahrzeugbatterie auf mindestens 80%, 85%, 90% oder 95% angehoben wird. Auf diese Weise kann ermöglicht werden, dass die Fahrzeugbatterie möglichst aufgeladen ist, bevor das Fahrzeug die Oberleitung verlässt.

Zudem kann die Erfindung bei einem Verfahren zum Betreiben eines Fahrzeuges vorsehen, dass im Schritt 2) eine Obergrenze des zulässigen SOC-Bereiches der Fahrzeugbatterie für eine bestimmte Zeitdauer angehoben wird. Somit kann die Batterie auf eine einfache und effektive Weise vor Überladung geschützt werden.

Außerdem kann die Erfindung bei einem Verfahren zum Betreiben eines Fahrzeuges vorsehen, dass im Schritt 2) eine Obergrenze des zulässigen SOC-Bereiches der Fahrzeugbatterie nur solange angehoben wird, solange eine Kontaktierung der Oberleitung durch den Stromabnehmer erfolgt. Auch somit kann die Batterie auf eine einfache und effektive Weise vor Überladung geschützt werden.

Zusätzlich kann die Erfindung bei einem Verfahren zum Betreiben eines Fahrzeuges vorsehen, dass der Schritt 2) eine bestimmte Beendungszeitdauer vor dem, insbesondere voraussichtlichen, Beenden der Kontaktierung der Oberleitung durch den Stromabnehmer beendet wird. Mithin kann sichergestellt werden, dass die Anpassung des SOC-Fensters spätestens dann beendet wird, wenn das Fahrzeug die Oberleitung verlässt.

Ferner kann die Erfindung bei einem Verfahren zum Betreiben eines Fahrzeuges vorsehen, dass das Verfahren mindestens einen weiteren Schritt aufweist:
3) Zurücksetzen des angepassten, insbesondere erweiterten, SOC-Bereiches der Fahrzeugbatterie auf vorgeschriebene Werte für die Fahrzeugbatterie, wenn die Kontaktierung der Oberleitung durch den Stromabnehmer beendet ist.
Somit kann ermöglicht werden, dass die Anpassung des SOC-Fensters maximal für die Dauer der Kontaktierung der Oberleitung andauert.

Weiterhin kann die Erfindung bei einem Verfahren zum Betreiben eines Fahrzeuges vorsehen, dass vor dem Schritt 1) und/oder im Schritt 2) der zulässige SOC-Bereich der Fahrzeugbatterie in Abhängigkeit von mindestens einem Betriebsparameter der Fahrzeugbatterie angepasst, insbesondere erweitert, wird, wobei der Betriebsparameter einen aktuellen Ladezustand, eine aktuelle Temperatur, eine zulässige Spannung, einen zulässigen Ladestrom, eine zulässige Restkapazität und/oder einen aktuellen Innenwiderstand umfasst. Auf diese Weise kann das Verfahren besonders effizient und schonend für die Fahrzeugbatterie durchgeführt werden. Wenn bspw. die Batterie bereits ausreichend voll ist und/oder die Oberleitung nicht zu lang, kann bspw. von der Anpassung des SOC-Bereiches im Schritt 2) abgesehen werden und/oder eine bestimmte Zeitdauer für die Anpassung des SOC-Bereiches verkürzt werden. Auch kann dadurch eine Schädigung der Batterie auf eine vorteilhafte Weise vermieden werden.

Zudem kann die Erfindung bei einem Verfahren zum Betreiben eines Fahrzeuges vorsehen, dass vor dem Schritt 1) und/oder im Schritt 2) einem Benutzer des Fahrzeuges, bspw. mithilfe einer Anzeigeeinheit, z. B. in Form eines Touchdisplays und/oder eines Eingabeinstruments, angeboten wird, zu bestätigen, ob der zulässige SOC-Bereich der Fahrzeugbatterie angepasst, insbesondere erweitert, werden soll, und/oder dass vor dem Schritt 1) und/oder im Schritt 2) einem Benutzer des Fahrzeuges, bspw. mithilfe einer Anzeigeeinheit, angeboten wird, eine Obergrenze und/oder eine Untergrenze des zulässigen SOC-Bereiches der Fahrzeugbatterie auszuwählen. Das Verfahren kann somit verständlich für den Fahrer des Fahrzeuges durchgeführt werden kann. Das Verfahren kann auch nach Wunsch des Fahrers gestartet oder abgebrochen werden. Bspw. kann der Benutzer das Verfahren stoppen, wenn er weiß, dass er bald für eine längere Zeit, bspw. über Nacht, parken wird und die Batterie sowieso geladen werden kann. Vorteilhafterweise kann somit dem Fahrer ermöglicht werden, den Ablauf des Verfahrens zu beeinflussen. Auf diese Weise kann das Verfahren besonders kundenfreundlich durchgeführt werden. Auch das Vertrauen in die Fahrzeuginfrastruktur kann dadurch gestärkt werden.

Ferner stellt die Erfindung ein Fahrzeug bereit, aufweisend eine Steuereinheit (bspw. implementiert in einem zentralen Steuergerät des Fahrzeuges) mit einer Speichereinheit, in welcher ein Programmcode hinterlegt ist, und einer Recheneinheit, wobei bei einer zumindest teilweisen Ausführung des Programmcodes in der Recheneinheit ein Verfahren ausgeführt wird, welches, wie oben beschrieben, ablaufen kann. Mithilfe eines solchen Fahrzeuges können die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Weiterhin wird die Erfindung anhand der Figur näher dargestellt. Dabei ist zu beachten, dass die Figur nur einen beschreibenden Charakter hat und nicht dazu gedacht ist, die Erfindung in irgendeiner Form einzuschränken. Es zeigt:

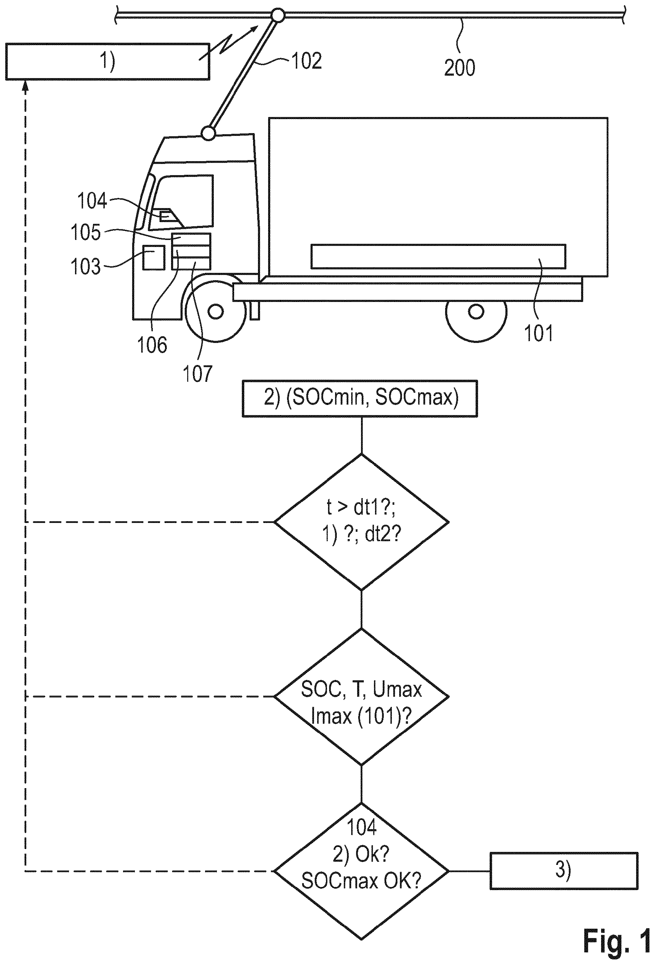

- Fig. 1: eine beispielhafte Darstellung zum Visualisieren eines Verfahrens im Sinne der Erfindung.

Die Figur 1 dient zur Veranschaulichung eines erfindungsgemäßen Verfahrens zum Betreiben eines Fahrzeuges 100, insbesondere eines Hybridfahrzeuges oder Elektrofahrzeuges, mit einem Stromabnehmer 102, bspw. in Form eines Hebelgestänges oder eines biegsamen und/oder federnden Gebildes, zur Kontaktierung einer Oberleitung 200, und (mindestens) einer Fahrzeugbatterie 101 zum Versorgen mindestens eines Verbrauchers des Fahrzeuges 100 mit elektrischer Energie,
aufweisend folgende Schritte:
1) Erfassen einer Kontaktierung der Oberleitung 200 durch den Stromabnehmer 102 und
2) Anpassen, insbesondere Erweitern, eines zulässigen SOC-Bereiches SOCmin, SOCmax der Fahrzeugbatterie 101, um die Fahrzeugbatterie 101 mit dem angepassten SOC-Bereich SOCmin, SOCmax aufzuladen, und Betreiben des Fahrzeuges 100 mit dem angepassten zulässigen SOC-Bereich SOCmin, SOCmax der Fahrzeugbatterie 101.

Im Schritt 2) wird im Rahmen der Erfindung ein dynamischer SOC-Bereich für die Fahrzeugbatterie 101 bereitgestellt, die bspw. in Form einer Starterbatterie, einer Traktionsbatterie und/oder einer Hilfsbatterie des Fahrzeuges 100 ausgeführt werden kann. Grundsätzlich kann das Verfahren im Rahmen der Erfindung für jede Batterie des Fahrzeuges 100 durchgeführt werden. Die Fahrzeugbatterie 101 kann im Betrieb des Fahrzeuges 100 elektrische Energie für eine elektrische Maschine des Fahrzeuges 100 und/oder für mindestens einen Verbraucher am Board des Fahrzeuges 100 bereitstellen. Das Betreiben des Fahrzeuges 100 kann insbesondere ein Fahren des Fahrzeuges 100 umfassen.

Gemäß der Erfindung wird der SOC-Bereich SOCmin, SOCmax, sog. SOC-Fenster, in dem Moment, in dem der Stromabnehmer 102 des Fahrzeuges 100 mit der Oberleitung 200 in Kontakt kommt, angepasst, insbesondere vergrößert. Dieser Moment wird im Schritt 1) sensiert. Die Anpassung im Schritt 2) kann nachfolgend, simultan oder sogar vorausschauend zum Schritt 1) erfolgen.

Mithilfe der Erfindung wird möglich gemacht, dass die Fahrzeugbatterie 101 beim Fahren des Fahrzeuges mehr aufgeladen wird, als es beim stationären Laden erlaubt ist, und folglich länger elektrische Energie liefern kann, nachdem keine Oberleitung mehr da ist.

Der angepasste, insbesondere vergrößerte, SOC-Bereich SOCmin, SOCmax kann im Rahmen der Erfindung nur, insbesondere nur solange oder maximal solange, aufrechterhalten werden, wenn das Fahrzeug 100 mit der Oberleitung 200 in Berührung kommt. Dies ist zurzeit für eine kurze Zeitdauer möglich.

Um den Fall abzusichern, dass die (Autobahn-) Infrastruktur längere Strecken mit Oberleitungen 200 aufweist, kann der angepasste SOC-Bereich SOCmin, SOCmax für eine bestimmte, d. h. bewusst einstellbare, Zeitdauer dt1 und/oder eine bestimmte Beendungszeitdauer dt2 kurz vor dem Ende der Oberleitung 200 aufrechterhalten werden. Danach kann der angepasste SOC-Bereich SOCmin, SOCmax zurückgesetzt werden, bspw. auf die vom Hersteller vorgeschriebenen Werte für die Fahrzeugbatterie 101.

Ferner kann im Rahmen der Erfindung vor dem Schritt 1) eine vorausschauende Erkennung einer voraussichtlichen Kontaktierung der Oberleitung 200 durch den Stromabnehmer 102 durchgeführt werden. Dabei können bspw. Navigationsdaten, Fahrtenbuchdaten und/oder Daten von Schilderkennungssensoren berücksichtigt werden. Auf diese Weise kann das Verfahren besonders effizient, genau und zielgerichtet durchgeführt werden, wobei die Fahrzeuginfrastruktur auf eine verbesserte Weise ausgenutzt werden kann.

Vorteilhafterweise kann vor dem Schritt 1) eine Untergrenze SOCmin des zulässigen SOC-Bereiches SOCmin, SOCmax der Fahrzeugbatterie 101 vorausschauend abgesenkt werden, wenn eine voraussichtliche Kontaktierung der Oberleitung 200 durch den Stromabnehmer 102 erkannt wurde. Denkbar ist dabei, dass vor dem Schritt 1) eine Untergrenze SOCmin des zulässigen SOC-Bereiches SOCmin, SOCmax der Fahrzeugbatterie 101 vorausschauend auf mindestens 30%, 20%, 15% oder 10% abgesenkt wird, wenn eine voraussichtliche Kontaktierung der Oberleitung 200 durch den Stromabnehmer 102 erkannt wurde. Somit kann ermöglicht werden, dass die Fahrzeugbatterie 101 vorzeitig entladen wird, bevor eine Kontaktierung der Oberleitung 200 durch den Stromabnehmer 102 erfolgt, um die Fahrzeugbatterie 101 bei der Kontaktierung der Oberleitung 200 effizient aufladen zu können.

Weiterhin können im Schritt 1) mindestens ein kontaktloser Sensor und/oder mindestens ein kontaktbehafteter Sensor verwendet werden/wird, und/oder dass im Schritt 1 mindestens ein Piezosensor, Drucksensor, Stromsensor und/oder Kapazitätssensor verwendet werden/wird. Kontaktlose Sensoren können bspw. durch Schilderkennungssensoren und/oder Navigationsgeräte bereitgestellt werden. Kontaktbehaftete Sensoren können bspw. eine physische Berührung der Oberleitung erfordern.

Denkbar ist es im Rahmen der Erfindung, dass im Schritt 2) eine Obergrenze SOCmax des zulässigen SOC-Bereiches SOCmin, SOCmax der Fahrzeugbatterie 101 grundsätzlich, insbesondere jedoch auf mindestens 80%, 85%, 90% oder 95%, angehoben wird.

Wie oben bereits angedeutet, kann im Schritt 2) eine Obergrenze SOCmax des zulässigen SOC-Bereiches SOCmin, SOCmax der Fahrzeugbatterie 101 für eine bestimmte Zeitdauer dt1 angehoben werden. Grundsätzlich ist es denkbar, dass im Schritt 2) eine Obergrenze SOCmax des zulässigen SOC-Bereiches SOCmin, SOCmax der Fahrzeugbatterie 101 nur solange angehoben wird, solange oder maximal solange eine Kontaktierung der Oberleitung 200 durch den Stromabnehmer 102 erfolgt. Auch ist es denkbar, dass der Schritt 2) eine bestimmte Beendungszeitdauer dt2 vor dem, insbesondere voraussichtlichen, Beenden der Kontaktierung der Oberleitung 200 durch den Stromabnehmer 102 beendet wird.

Nach der Beendigung des Schrittes 2), insbesondere spätestens dann, wenn die Kontaktierung der Oberleitung 200 durch den Stromabnehmer 102 beendet ist, kann im Schritt 3) ein Zurücksetzen des angepassten, insbesondere erweiterten, SOC-Bereiches SOCmin, SOCmax der Fahrzeugbatterie 101 auf vorgeschriebene Werte für die Fahrzeugbatterie 101 durchgeführt werden.

Vorteilhafterweise kann vor dem Schritt 1) und/oder im Schritt 2) der zulässige SOC-Bereich SOCmin, SOCmax der Fahrzeugbatterie 101 in Abhängigkeit von mindestens einem Betriebsparameter der Fahrzeugbatterie 101 angepasst werden, wobei der Betriebsparameter einen aktuellen Ladezustand SOC, eine aktuelle Temperatur T, eine zulässige Spannung Umax, einen zulässigen Ladestrom Imax, eine zulässige Restkapazität und/oder einen aktuellen Innenwiderstand umfassen kann.

Auf eine vorteilhafte Weise kann vor dem Schritt 1) und/oder im Schritt 2) einem Benutzer des Fahrzeuges 100, bspw. mithilfe einer Anzeigeeinheit 104, z. B. in Form eines Touchdisplays und/oder eines Eingabeinstruments, angeboten werden, zu bestätigen, ob der zulässige SOC-Bereich SOCmin, SOCmax der Fahrzeugbatterie 101 angepasst, insbesondere erweitert, werden soll.

Auch kann vor dem Schritt 1) und/oder im Schritt 2) einem Benutzer des Fahrzeuges 100, bspw. mithilfe einer Anzeigeeinheit 104, angeboten werden, eine Obergrenze SOCmax und/oder eine Untergrenze SOCmin des zulässigen SOC-Bereiches SOCmin, SOCmax der Fahrzeugbatterie 101 auszuwählen.

Ein Fahrzeug 100 stellt ebenfalls einen Aspekt der Erfindung dar, aufweisend eine Steuereinheit 105, die bspw. in einem zentralen Steuergerät des Fahrzeuges 100 implementiert sein kann, mit einer Speichereinheit 106, in welcher ein Programmcode hinterlegt ist, und einer Recheneinheit 107, wobei bei einer zumindest teilweisen Ausführung des Programmcodes in der Recheneinheit 107 ein Verfahren ausgeführt wird, welches, wie oben beschrieben, ablaufen kann.

Die voranstehende Beschreibung der Figur beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- 100: Fahrzeug
- 101: Fahrzeugbatterie
- 102: Stromabnehmer
- 103: funktionswesentliche Komponente
- 104: Anzeigeeinheit
- 105: Steuereinheit
- 106: Speichereinheit
- 107: Recheneinheit

- 200: Oberleitung

- SOC: Ladezustand

- SOCmin, SOCmax: SOC-Bereich

- SOCmin: Obergrenze des SOC-Bereiches
- SOCmax: Untergrenze des SOC-Bereiches

- dt1: bestimmte Zeitdauer
- dt2: bestimmte Beendungszeitdauer

- Imax: zulässiger Ladestrom
- Umax: zulässige Spannung

- T: aktuelle Temperatur

## Patentansprüche

1. Verfahren zum Betreiben eines Fahrzeuges (100), insbesondere eines Hybridfahrzeuges oder Elektrofahrzeuges, mit einem Stromabnehmer (102) zur Kontaktierung einer Oberleitung (200) und einer Fahrzeugbatterie (101) zum Versorgen mindestens eines Verbrauchers des Fahrzeuges (100) mit elektrischer Energie,
aufweisend folgende Schritte:
1) Erfassen einer Kontaktierung der Oberleitung (200) durch den Stromabnehmer (102) und
2) Anpassen, insbesondere Erweitern, eines zulässigen SOC-Bereiches (SOCmin, SOCmax) der Fahrzeugbatterie (101), um die Fahrzeugbatterie (101) mit dem angepassten SOC-Bereich (SOCmin, SOCmax) aufzuladen, und Betreiben des Fahrzeuges (100) mit dem angepassten zulässigen SOC-Bereich (SOCmin, SOCmax) der Fahrzeugbatterie (101).

2. Verfahren nach Anspruch 1,
**dadurch gekennzeichnet,**
**dass** vor dem Schritt 1) eine vorausschauende Erkennung einer voraussichtlichen Kontaktierung der Oberleitung (200) durch den Stromabnehmer (102) erfolgt,
und/oder dass vor dem Schritt 1) Navigationsdaten, Fahrtenbuchdaten und/oder Daten von Schilderkennungssensoren berücksichtigt werden,
und/oder dass vor dem Schritt 1) eine Untergrenze (SOCmin) des zulässigen SOC-Bereiches (SOCmin, SOCmax) der Fahrzeugbatterie (101) vorausschauend abgesenkt wird,
wenn eine voraussichtliche Kontaktierung der Oberleitung (200) durch den Stromabnehmer (102) erkannt wurde.

3. Verfahren nach einem der vorhergehenden Ansprüche,
**dadurch gekennzeichnet,**
**dass** vor dem Schritt 1) eine Untergrenze (SOCmin) des zulässigen SOC-Bereiches (SOCmin, SOCmax) der Fahrzeugbatterie (101) nur solange abgesenkt wird,
bis eine Kontaktierung der Oberleitung (200) durch den Stromabnehmer (102) erfasst wird,
und/oder dass im Schritt 1) eine Untergrenze (SOCmin) des zulässigen SOC-Bereiches (SOCmin, SOCmax) der Fahrzeugbatterie (101) auf einen vorgeschriebenen Wert für die Fahrzeugbatterie (101) gesetzt wird,
wenn eine Kontaktierung der Oberleitung (200) durch den Stromabnehmer (102) erfasst wird.

4. Verfahren nach einem der vorhergehenden Ansprüche,
**dadurch gekennzeichnet,**
**dass** im Schritt 2) eine Obergrenze (SOCmax) des zulässigen SOC-Bereiches (SOCmin, SOCmax) der Fahrzeugbatterie (101) angehoben wird.

5. Verfahren nach einem der vorhergehenden Ansprüche,
**dadurch gekennzeichnet,**
**dass** im Schritt 2) eine Obergrenze (SOCmax) des zulässigen SOC-Bereiches (SOCmin, SOCmax) der Fahrzeugbatterie (101) für eine bestimmte Zeitdauer (dt1) angehoben wird.

6. Verfahren nach einem der vorhergehenden Ansprüche,
**dadurch gekennzeichnet,**
**dass** im Schritt 2) eine Obergrenze (SOCmax) des zulässigen SOC-Bereiches (SOCmin, SOCmax) der Fahrzeugbatterie (101) nur solange angehoben wird, solange eine Kontaktierung der Oberleitung (200) durch den Stromabnehmer (102) erfolgt,
oder dass der Schritt 2) eine bestimmte Beendungszeitdauer (dt2) vor dem, insbesondere voraussichtlichen, Beenden der Kontaktierung der Oberleitung (200) durch den Stromabnehmer (102) beendet wird.

7. Verfahren nach einem der vorhergehenden Ansprüche,
**dadurch gekennzeichnet,**
**dass** das Verfahren mindestens einen weiteren Schritt aufweist:
3) Zurücksetzen des angepassten, insbesondere erweiterten, SOC-Bereiches (SOCmin, SOCmax) der Fahrzeugbatterie (101) auf vorgeschriebene Werte für die Fahrzeugbatterie (101), wenn die Kontaktierung der Oberleitung (200) durch den Stromabnehmer (102) beendet ist.

8. Verfahren nach einem der vorhergehenden Ansprüche,
**dadurch gekennzeichnet,**
**dass** vor dem Schritt 1) und/oder im Schritt 2) der zulässige SOC-Bereich (SOCmin, SOCmax) der Fahrzeugbatterie (101) in Abhängigkeit von mindestens einem Betriebsparameter der Fahrzeugbatterie (101) angepasst, insbesondere erweitert, wird, wobei der Betriebsparameter einen aktuellen Ladezustand (SOC), eine aktuelle Temperatur (T), eine zulässige Spannung (Umax), einen zulässigen Ladestrom (Imax), eine zulässige Restkapazität und/oder einen aktuellen Innenwiderstand umfasst.

9. Verfahren nach einem der vorhergehenden Ansprüche,
**dadurch gekennzeichnet,**
**dass** vor dem Schritt 1) und/oder im Schritt 2) einem Benutzer des Fahrzeuges (100) angeboten wird,
zu bestätigen, ob der zulässige SOC-Bereich (SOCmin, SOCmax) der Fahrzeugbatterie (101) angepasst, insbesondere erweitert, werden soll,
und/oder dass vor dem Schritt 1) und/oder im Schritt 2) einem Benutzer des Fahrzeuges (100) angeboten wird,
eine Obergrenze (SOCmax) und/oder eine Untergrenze (SOCmin) des zulässigen SOC-Bereiches (SOCmin, SOCmax) der Fahrzeugbatterie (101) auszuwählen.

10. Verfahren nach einem der vorhergehenden Ansprüche,
**dadurch gekennzeichnet,**
**dass** im Schritt 1) mindestens ein kontaktloser Sensor und/oder mindestens ein kontaktbehafteter Sensor verwendet werden/wird,
und/oder dass im Schritt 1) mindestens ein Piezosensor, Drucksensor, Stromsensor und/oder Kapazitätssensor verwendet werden/wird.
